# EUROPEAN PATENT APPLICATION

(11) **EP 4 749 459 A1**
(43) Date of publication of application: **27.05.2026**
(21) Application number: 25217712.6
(22) Date of filing: 21.11.2025
(51) Int. Cl.: G06F 9/50

(54) **A DISTRIBUTED COMPUTING SYSTEM**

(30) Priority: 22.11.2024 GB 202417215
(71) Applicant: Vodafone Group Services Limited, Newbury RG14 2FN (GB)
(72) Inventor: YOUNG, Gavin, London, W2 6BY (GB)
(74) Representative: Boult Wade Tennant LLP

(57) **Abstract**

A distributed computing system, comprising a control node and a plurality of provider nodes. One or more of the provider nodes are a customer premises equipment (CPE), each CPE comprising one of: a broadband router, a modem, a residential gateway. The control node and the plurality of provider nodes are arranged in a grid computing network to provide a distributed computational resource by aggregating surplus computational resources at the plurality of provider nodes.

## Description

### Field of the Disclosure

A distributed computing system and method for providing the same. The distributed computing system comprises a control node and a plurality of provider nodes arranged in a grid computing network to provide a distributed computational resource. The distributed computational resource is provided by aggregating surplus computing resources at the plurality of provider nodes. At least one of the provider nodes (and in some cases all the provider nodes) are a customer premises equipment being either a broadband router, residential gateway, or a modem.

### Background to the Disclosure

Grid computing is a computing infrastructure that allows the combination of many different computing resources, that may be geographically distributed, to work towards a common goal. For instance, grid computing applies an infrastructure in which a single computational task can be subdivided into subtasks, and then each subtask can be executed in parallel at different computing resources in the grid computing network. The rest of each subtask is subsequently consolidated to provide the result of the original, single computational task. Use of a grid computing infrastructure provides flexible and distributed computing making it possible to perform complex computations across multiple resources simultaneously. It also provides an avenue for more efficient use of computing resources, speeding up complex calculations than compared to execution of a dedicated device. It can provide a powerful tool for performing complex computing calculations.

Typically, grid computing can make use of space computing resources at a networked computer (such as a personal computer or laptop) when not in use. In another example, DreamLab^{RTM} by Vodafone^{RTM} is a smartphone application that provides connection of smartphones or mobile devices to a grid computing infrastructure. In this way, the DreamLab^{RTM} application provides for use of unused computing resources at connected mobile phones and devices for analysis of complex data.

In view of this background, new options for providing a distributed computing system are sought.

### Summary of the Disclosure

Against this background, a distributed computing system is disclosed, which comprises a grid computing network having a control node and a plurality of provider nodes. At least some (and in some cases all) of the provider nodes may be customer premises equipment such as a broadband router, a residential gateway, or a modem. For instance, the customer premises equipment may be a broadband router in a private residence of a customer of an internet service provider.

Each provider node donates surplus computational resources (being surplus processing capacity and surplus memory capacity) to the grid computing network, to be aggregated into a distributed computational resource. The distributed computational resource can subsequently be used by a user node to undertake a computational task.

Optionally, the control node, which administers the grid computing network, can coordinate booking and charging for use of the distributed computational resource by a user node. In further examples, machine learning may be used to model and predict the capacity of the distributed computational resource at different times of day and at different dates, thereby allowing reservation (or allocation) of portions of the distributed computational resource to a user at a future time or date. A dedicated Application Programming Interface (API) may be provided as an interface for the grid computing network.

The disclosed distributed computing system provides a number of advantages. Firstly, the system makes use of 'spare' or surplus computing resources that, in order to fulfil the core function of the device acting as a provider node, are already available and powered at each provider node. This eschews the use of specific and dedicated data centres to perform the computational tasks required by a user node of the grid computing network. As such, this avoids production and implementation of new hardware, saving costs and more efficiently using existing computer hardware.

Secondly, a grid computing network allows for a complex computational task to be subdivided into multiple smaller subtasks, which can then be worked on concurrently and in parallel at different provider nodes. This provides an efficient computational solution. In some cases, the grid computing network can be considered to operate akin to a supercomputer.

Finally, geographical distribution of provider nodes acts to geographically distribute power sources need to undertake complex computation tasks. In particular, it is generally acknowledged that ever more complex computational tasks will, in future, require increasing amounts of power (for instance, to power larger and larger data centres). Provision of sufficient power to individual data centres poses significant challenges. A grid computing network can help mitigate some of the requirements for a single large power source at a single location, by distributing subtasks to different provider nodes at different locations. In general, using spare or surplus computational resources at a provider node of a grid computing network may be relatively more energy efficient than powering additional computational resources at a dedicated data centre, since only an incremental power load is added to each (already powered) provider node.

In a first aspect there is described a distributed computing system, comprising:
a control node; and
a plurality of provider nodes, one or more of the provider nodes being a customer premises equipment (CPE), each CPE comprising one of: a broadband router, a residential gateway, a modem;
wherein the control node and the plurality of provider nodes are arranged in a grid computing network to provide a distributed computational resource by aggregating surplus computational resources at the plurality of provider nodes.

A grid computing network is a computing infrastructure that combines computing resources spread across different computational devices (known as provider nodes), that may be geographically distributed. Surplus resources on the different provider nodes may be pooled, to be made available as a distributed computational resource that is centrally administered by the control node, and which can be applied to a common computational task. A grid computing network contrasts to cloud computing, which allows access at different, distributed computational devices to resources at a central server or device.

The control node may be a central computational device (such as a server or computer) that administers and manages the grid computing network. Each provider node is in communication with (or shares a data connection with) the control node. Typically, there is no requirement for different provider nodes to be in direct communication with each other. The control node manages the aggregation of surplus computational resources from each provider node, including the allocation of the distributed computational resource to users (assigning computational subtasks to each specific provider node, and receiving and consolidating the output of each subtask from each provider node).

Each provider node is a computational device that can provide computing resources to the pool or aggregate of the grid computing network. Each provider node may receive resource requests, receive subtasks allocated to it by the control node, undertake those subtasks, and then return the result to the control node for compilation with the results from other provider nodes.

According to the invention, at least one provider node is a customer premises equipment (CPE) (being a broadband router, residential gateway, or modem). All the provider nodes of the plurality of provider nodes may be CPE, each one of the CPE comprising either a broadband router, a modem, or a residential gateway. Alternatively, the CPE could be considered or known as a Broadband Customer Premises Equipment or Home Router. It will be understood that a modem is a device that brings internet services into a premises (and to a router) from an internet service provider, whilst a broadband router (also known as a broadband customer premises equipment) is a device that delivers the internet connection to connected devices (for instance, via WiFi or Ethernet). In some cases, the function of a router and a modem are provided in the same CPE, and this combined all-in-one solution (having both router and modem capabilities) can be considered a residential gateway. Typically, routers have hardware specifications providing greater processing and memory capacity than modem (because, for example, the router provides functionality such as WiFi optimisation or parental controls), but both may have surplus processing or memory capacity. The CPE may be a private-user CPE or a business-user CPE. Each CPE being used as a provider node will have received approval in advance from a user or owner of the given CPE.

Each provider node of the plurality of provider nodes may comprise a containerised function, to enable surplus computational resources at the provider node to be aggregated into the distributed computational resource. In particular, a grid computing architecture requires a specific architecture, including specialised software that runs at each node in order to connect it to the grid computing network. For instance, each provider node requires software to be deployed at the device acting as a provider node, in order to accept subtasks to be run using its surplus computational resources (in other words, to donate surplus computational resources to the grid computing network). In view of this, where the provider node is a CPE, such software is deployed as a containerised function. This allows the software for the grid computing network to run at the provider node in isolation, without requiring compatibility testing with other software also deployed at the provider node (i.e. software to perform the core function of the device acting as a provider node). Furthermore, use of containerised functions also avoids the need to reboot a CPE when the software to enable the device to join the grid computing network as a provider node is installed or updated. This prevents disruption to the core functions of the device acting as a provider node (for instance, the broadband router or modem functions).

Surplus computational resources may comprise a proportion of unused computational resources at each provider node of the plurality of provider nodes. In other words, at any particular time, there may be unused (or latent) computational resources (processing or memory capacity) at the provider node (which may be a CPE). However, not all of the unused computational resources may be used by the grid computing network. Instead, at each provider node only a proportion (which may be a predefined percentage, such as 70%, 50% or 30%) of the unused computational resource may be used or incorporated into the grid computing network. This retains some idle computing resource at the provider node, even when connected within the grid computing network, to allow for changes in the computing resources required to fulfil the core function of the provider node (for instance, to act as a broadband router, where the provider node is a broadband router).

The surplus computational resources at each provider node of the plurality of provider nodes comprises central processing unit (CPU) capacity, graphics processing unit (GPU) capacity, neural processing unit (NPU) capacity, processing capacity at an application-specific integrated circuit (ASIC) and/or memory capacity. The memory capacity may be internal memory capacity (RAM, hard disk etc.) or connected memory capacity (for instance, USB or Ethernet connected external storage). The surplus computational resources provided by a provider node to a grid computing network may be any processing or memory capacity available according to the hardware specifications of the device acting as a provider node. Processing capacity, memory capacity, or both, may be donated to the grid computing network, and the amount of the given resource may vary at different times, as discussed below.

The distributed computing system may further comprise a user node, the user node configured to: send a request to the control node for use of the distributed computational resource provided by the grid computing network; and if the request is granted, use the distributed computational resource provided by the grid computing network. Similarly, the control node may be configured to: receive from the user node a request for use of the distributed computational resource provided by the grid computing network; and allocate a proportion of the distributed computational resource provided by the grid computing network in response to the request from the user node, the allocation based on an amount of the distributed computational resources requested and an amount of available computing resources of the distributed computational resource.

The user node of a grid computing network is a computational device within the grid computing network. In some cases, a node can switch roles between being a user node and being a provider node. The user node can request use of a portion of the distributed computational resource, in order to perform a computational task. A request is sent from the user node to the control node, which, if sufficient distributed computational resources are available, will receive the computational task. The control node subdivides the task and allocates subtasks to different provider nodes to run thereon. The control node subsequently receives and combines the output from each provider node, to obtain the result of the computational task originally received from the user node. The result is returned to the user node from the control node. In this sense, 'use' of the distributed computational resource provided by the grid computing network means to send a task to the control node and subsequently receive an outcome from that task from the control node.

The control node is configured to: determine the amount of distributed computational resource available for use by a user node; and provide to a user node an indication of the amount of distributed computational resource available for use by a user node. In other words, the control node administers the grid computing network and so can establish the total amount of distributed computational resource at a given time and the amount of distributed resource that is available and not already allocated to an existing user node. The control node may provide an indication of either or both amounts to a user at a new user node in response to a request.

The control node may be connected to a set of connected computational devices, and each provider node of the plurality of provider nodes may be a connected computational device from within the set of connected computational devices. In particular, it will be understood that computational devices may start and stop their role as a provider node (either in view of their computational resources available, or whether they are powered on or off). As such, each provider node may be taken from within a pool, group or set of connected computational devices in communication with the control node. In other words, the control node may have a data connection to a number of computational devices, and all or a subset of the devices having a data connection to the control node may act as a provider node at any given time.

A connected computational device of the set of connected computational devices may act as a provider node when unused computational resources at the connected computational device exceeds a threshold proportion of the maximum possible computational resource capacity at the connected computational device. In other words, a computational device in data connection with the control node will only begin to act as a provider node if it has a certain proportion of spare or unused capacity. This means that a device will not act as a provider node when its core functions are in high demand, but may act as a provider node when its core functions are in lower demand. The threshold proportion may be, for example, that the connected computational device begins to act a provider node only when a predefined percentage (such as 20%, 30% or 50%) of the possible (hardware defined) processing and/or memory capacity are unused. It should be noted that, as discussed above, only a portion of the unused computational resources at a provider node may then be shared with the grid computing network, once the connected computational device begins to act as a provider node.

The computational device of the set of connected computational devices may cease to act as a provider node if the primary function of the connected computational device requires computational resources that cannot be satisfied whilst the computational device is acting as a provider node. In other words, the connected computational device prioritises its core function (for instance, as a broadband router or as a modem, where the connected device is a CPE). Therefore, a connected device stops acting as a provider node (i.e. stops providing computational resources to the grid computing network) if the core functions of the device require additional resources and the unused computational resources at the device fall below a certain level.

The control node may be configured to receive metrics from each connected computational device of the set of connected computational devices, the metrics comprising information for determination of an amount of surplus computational resources at each connected computational device. Information for determination of the amount of surplus computational resources at each connected computational device may be the amount of surplus computational resources at a given connected computational device, or the unused computational resources at a given connected computational device, for example, or any other metrics to allow determination of the surplus computational resources at a given connected computational device. Processing capacity may refer to the maximum number of requests per unit time that can be sent to a connected computing device for processing without any loss of requests. Memory capacity may refer to bytes of unused memory.

The control node may be configured to determine a capacity of the distributed computational resource from the metrics received from each connected computational device of the set of connected computational device. The maximum possible capacity of the distributed computational resource provided by the grid computing network at any given time may be obtained by the control node upon receipt of information on the amount of surplus computational resources available at each provider node (being the total of the surplus computational resources across all provider nodes).

The control node may also be configured to provide an indication of the determined capacity of the distributed computational resource to a user node. In other words, the control node provides an indication to the provider node of the available aggregate computational resources in the grid computing network. A user at the user node can then request a suitable allocation in order to run a computational task using the distributed computational resource. The indication may be sent to the user via the NaaP API discussed elsewhere in this disclosure.

The distributed computing system may further comprise computer memory in communication with the control node, wherein the control node is further configured to store in a database at the computer memory statistics relating to the determined capacity of the distributed computational resource at different times and dates. The statistics may be the metrics received from each connected computational device, or other measures derived from them, for instance. The database provides a historical record of the available distributed computational resources over time.

The control node may be further configured to execute a computer model to predict the capacity of the distributed computational resource at different dates and times, the computer model based on the statistics stored in the database. The computer model may be a machine learning model that has been trained on the statistics stored in the database.

The control node may be further configured to: receive from the user node a request for use of the distributed computational resource provided by the grid computing network at a future time; and reserve an amount of the distributed computational resource provided by the grid computing network at that future time in response to the request from the user node, the allocation based on an amount of the distributed computational resource requested and the predicted capacity of the distributed computational resource at that future time, as predicted by the computer model. In other words, the control node may provide a booking system for a user node to reserve at least a portion of the distributed computational resource at a future time, wherein the control node uses the predictive computer model to estimate the distributed computational resources that are expected to be available for allocation at that time.

The control node may allocate to the user node a fee for use of computing resources provided by the grid computing network. In other words, the control node may apply a charging system or fee schedule for use of the distributed computational resource by a user node. In some cases, the fee schedule may be dynamic, and change according to supply and demand at the distributed computational resource. Accordingly, the fee allocated by the user node may be set dynamically, to apply a higher fee at times of increased demand relative to supply for the use of computing resources provided by the grid computing network than compared to a lower fee at times of reduced demand relative to supply for the use of computing resources provided by the grid computing network.

The distributed computational resource may have may applications, including for solving scientific research-based problems (for instance, e-science research collaboration programs in the life sciences, engineering or data science fields). In another example, the distributed computational resource could be used for machine learning or artificial intelligence. For instance, the user node may use the distributed computational resources provided by the grid computing network for inference processing (i.e. using a machine learning or artificial intelligence model to provide inferences) and/or for training of a machine learning or artificial intelligence model. This may have particular benefits because the grid computing network allows for a different power supply at the individual provider nodes, which are geographically distributed, rather than relying on a power source to a single location (as may be required for a typical data centre used for training and inference processing of a machine learning or artificial intelligence model). At present, the requirements of training a machine learning or artificial intelligence model are such that it would be difficult to undertake this task on a distributed computational resource. Despite this, once trained, the machine learning or artificial intelligence model could then be run using the distributed computational resource. In future, however, it is envisaged that the distributed computational resource could also be used for training of a machine learning or artificial intelligence model.

In a second aspect there is a method for providing a distributed computing system, comprising:
arranging a control node and a plurality of provider nodes in a grid computing network to provide a distributed computational resource by aggregating surplus computational resources at the plurality of provider nodes;
wherein one or more of the provider nodes is a customer premises equipment (CPE), each CPE comprising one of: a broadband router, a modem, a residential gateway.

It will be understood that the discussion of features and aspects of the distributed computing system above applies equally to common or like features of the method for providing a distributed computing system.

In some examples, all the provider nodes of the plurality of provider nodes may be CPE comprising one of: a broadband router, a modem.

Surplus computational resources at each of the provider nodes of the plurality of provider nodes may comprise central processing unit (CPU) capacity, graphics processing unit (GPU) capacity, neural processing unit (NPU) capacity, processing capacity at an application-specific integrated circuit (ASIC) and/or memory capacity.

The method may further comprise: receiving at the control node the request from a user node, the request for use of the distributed computational resource provided by the grid computing network; and allocating by the control node an amount of the distributed computational resource provided by the grid computing network to the user node in response to the request from the user node, the allocation based on an amount of the distributed computational resources requested and an amount of distributed computational resource available.

The control node may be connected to a set of connected computational devices, and each provider node of the plurality of provider nodes is a connected computational device from within the set of connected computational devices. A computational device of the set of connected computational devices may act as a provider node when unused computational resources at the connected computational device exceeds a threshold proportion of the maximum possible computational resource capacity at the connected computational device. A computational device of the set of connected computational devices may cease to act as a provider node if the primary function of the connected computational device requires computational resources that cannot be satisfied whilst the computational device is acting as a provider node.

The method may further comprise receiving, at the control node, metrics from each connected computational device of the set of connected computational devices, the metrics comprising information for determination of an amount of surplus computational resources at each connected computational device. For instance, information for determination of the amount of surplus computational resources at each provider node may be the amount of surplus computational resources at a given provider node or the unused computational resources at a given provider node.

The method may further comprise determining, at the control node, a capacity of the distributed computational resource from the metrics received from each connected computational device of the set of connected computational device.

The method may further comprise determining, at the control node, an amount of distributed computational resource available for use by a user node (in other words, not already allocated to a user node). The method may further comprise providing, by the control node, an indication to a user node of the amount of distributed computational resource available for use by a user node. Optionally, the method may further comprise providing an indication of the determined capacity of the distributed computational resource to a user node

The method may further comprise executing, at the user node, a computer model to predict the capacity of the distributed computational resource at different times of day and days of the week, the computer model based on statistics relating to the determined capacity of the distributed computational resource at different times and dates.

The method may further comprise: receiving a request from the user node, the request for use of the distributed computational resource provided by the grid computing network at a future time; and reserving an amount of the distributed computational resource provided by the grid computing network at that future time in response to the request from the user node, based on the allocation based on an amount of the distributed computational resource requested and the capacity of the distributed computational resource at that future time as predicted by the computer model.

Illustrative examples of the present invention are provided by the following numbered clauses:
1 . A distributed computing system, comprising:
   a control node; and
   a plurality of provider nodes, one or more of the provider nodes being a customer premises equipment (CPE), each CPE comprising one of: a broadband router, a modem, a residential gateway;
   wherein the control node and the plurality of provider nodes are arranged in a grid computing network to provide a distributed computational resource by aggregating surplus computational resources at the plurality of provider nodes.
2. The distributed computing system of clause 1, wherein each one of the provider nodes of the plurality of provider nodes are CPE being either a broadband router, a modem, or a residential gateway.
3. The distributed computing system of clause 1 or clause 2, wherein surplus computational resources comprise a proportion of unused computational resources at each provider node of the plurality of provider nodes.
4. The distributed computing system of any preceding clause, wherein the surplus computational resources at each of the provider nodes of the plurality of provider nodes comprises central processing unit (CPU) capacity, graphics processing unit (GPU) capacity, neural processing unit (NPU) capacity, processing capacity at an application-specific integrated circuit (ASIC) and/or memory capacity.
5. The distributed computing system of any preceding clause, further comprising a user node, the user node configured to:
   send a request to the control node for use of the distributed computational resource provided by the grid computing network; and
   if the request is granted, use the distributed computational resource provided by the grid computing network.
6. The distributed computing system of clause 5, wherein the control node is configured to:
   receive from the user node a request for use of the distributed computational resource provided by the grid computing network; and
   allocate a proportion of the distributed computational resource provided by the grid computing network in response to the request from the user node, the allocation based on an amount of the distributed computational resources requested and an amount of available computing resources of the distributed computational resource.
7. The distributed computing system of any preceding clause, wherein the control node is connected to a set of connected computational devices, and each provider node of the plurality of provider nodes is a connected computational device from within the set of connected computational devices.
8. The distributed computing system of clause 7, wherein a connected computational device of the set of connected computational devices acts as a provider node when unused computational resources at the connected computational device exceeds a threshold proportion of the maximum possible computational resource capacity at the connected computational device.
9. The distributed computing system of clause 8, wherein the computational device of the set of connected computational devices ceases to act as a provider node if the primary function of the connected computational device requires computational resources that cannot be satisfied whilst the computational device is acting as a provider node.
10. The distributed computing system of any one of clauses 7 to 9, wherein the control node is configured to:
   receive metrics from each connected computational device of the set of connected computational devices, the metrics comprising information for determination of an amount of surplus computational resources at each connected computational device.
11. The distributed computing system of clause 10, wherein the control node is configured to:
   determine a capacity of the distributed computational resource from the metrics received from each connected computational device of the set of connected computational device; and
   optionally, provide an indication of the determined capacity of the distributed computational resource to a user node.
12. The distributed computing system of clause 11, further comprising computer memory in communication with the control node, wherein the control node is further configured to:
   store statistics relating to the determined capacity of the distributed computational resource at different times and dates in a database at the computer memory.
13. The distributed computing system of clause 12, wherein the control node is further configured to:
   execute a computer model to predict the capacity of the distributed computational resource at different times of day and days of the week, the computer model based on the statistics stored in the database.
14. The distributed computing system of clause 13 when also dependent on clause 8, wherein the control node is configured to:
   receive from the user node a request for use of the distributed computational resource provided by the grid computing network at a future time; and
   reserve an amount of the distributed computational resource provided by the grid computing network at that future time in response to the request from the user node, the allocation based on an amount of the distributed computational resource requested and the predicted capacity of the distributed computational resource at that future time, as predicted by the computer model.
15. A method for providing a distributed computing system, comprising:
   arranging a control node and a plurality of provider nodes in a grid computing network to provide a distributed computational resource by aggregating surplus computational resources at the plurality of provider nodes;
   wherein one or more of the provider nodes is a customer premises equipment (CPE), each CPE comprising one of: a broadband router, a modem, a residential gateway.
16. The method of clause 15, wherein each one of the provider nodes of the plurality of provider nodes are CPE being either a broadband router, a modem, or a residential gateway.
17. The method of clause 15 or 16, wherein the surplus computational resources at each of the provider nodes of the plurality of provider nodes comprises central processing unit (CPU) capacity, graphics processing unit (GPU) capacity, neural processing unit (NPU) capacity, processing capacity at an application-specific integrated circuit (ASIC) and/or memory capacity.
18. The method of any one of clauses 15 to 17, further comprising:
   receiving at the control node the request from a user node, the request for use of the distributed computational resource provided by the grid computing network; and
   allocating by the control node an amount of the distributed computational resource provided by the grid computing network to the user node in response to the request from the user node, the allocation based on an amount of the distributed computational resources requested and an amount of distributed computational resource available.
19. The method of any one of clauses 15 to 18, wherein the control node is connected to a set of connected computational devices, and each provider node of the plurality of provider nodes is a connected computational device from within the set of connected computational devices.
20. The method of clause 19, wherein a computational device of the set of connected computational devices acts as a provider node when unused computational resources at the connected computational device exceeds a threshold proportion of the maximum possible computational resource capacity at the connected computational device.
21. The method of clause 20, wherein the computational device of the set of connected computational devices ceases to act as a provider node if the primary function of the connected computational device requires computational resources that cannot be satisfied whilst the computational device is acting as a provider node.
22. The method of any one of clauses 19 to 21, further comprising:
   receiving, at the control node, metrics from each connected computational device of the set of connected computational devices, the metrics comprising information for determination of an amount of surplus computational resources at each connected computational device.
23. The method of clause 22, further comprising:
   determining, at the control node, a capacity of the distributed computational resource from the metrics received from each connected computational device of the set of connected computational device; and
   optionally, providing an indication of the determined capacity of the distributed computational resource to a user node.
24. The method of clause 23, wherein further comprising:
   executing, at the user node, a computer model to predict the capacity of the distributed computational resource at different times of day and days of the week, the computer model based on statistics relating to the determined capacity of the distributed computational resource at different times and dates.
25. The method of clause 24, further comprising:
   receiving a request from the user node, the request for use of the distributed computational resource provided by the grid computing network at a future time; and
   reserving an amount of the distributed computational resource provided by the grid computing network at that future time in response to the request from the user node, based on the allocation based on an amount of the distributed computational resource requested and the capacity of the distributed computational resource at that future time as predicted by the computer model.

### Brief Description of the Figures

The present invention may be put into practice in a number of ways and embodiments will now be described by way of example only and with reference to the accompanying drawings, in which:
FIGURE 1 shows an example of system resource statistics for a typical broadband router;
FIGURE 2 shows a schematic representation of the distributed computing system;
FIGURE 3 shows a schematic representation of the distributed computational resource, being an aggregate of the surplus computational resources from each provider node;
FIGURE 4 shows a schematic representation of the division of computational resources at a single provider node;
FIGURE 5 shows screen shots from real-time demonstration of deployed containerised functions on RDK-B based broadband routers; and
FIGURE 6 shows a schematic representation of the distributed computing system, including other connected computational devices.

It should be noted that the figures are illustrated for simplicity and are not necessarily drawn to scale. Like features are provided with the same reference numerals.

### Detailed Description of Specific Embodiments

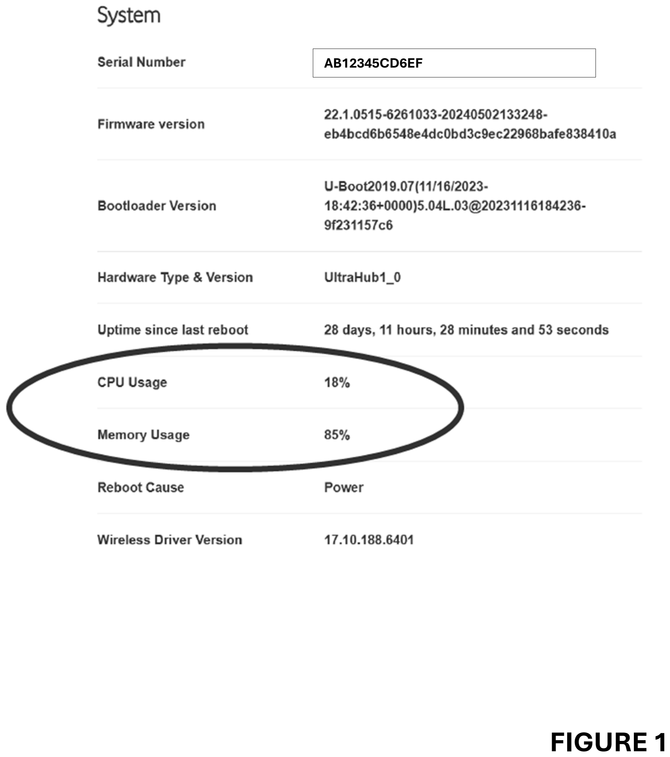

The widespread uptake of home broadband means that many residences have a broadband router (or residential gateway) and modem (which may be combined in a single unit). A modem is used to connect to an internet service provider's data network, whereas a broadband router delivers the internet connection to connected devices (for instance, through WiFi or Ethernet cables). Current broadband routers and modems comprise a central processing unit (CPU) to act as a processor, as well as computer memory or storage, in order to operate. However, the CPU and memory at broadband routers and modems are typically provided with redundant capability, in order to ensure their functions can always be established. In an example, FIGURE 1 shows the system statistics for a typical broadband router, which indicates that only a low proportion (in this case, 18%) of CPU capability is in use through normal usage. FIGURE 1 shows that some (15%) of the memory capability of the same router also remains unused. The inventors of the present invention have recognised that this unused capability could be aggregated with unused capability across a network of broadband routers and modem within a grid computing infrastructure, to provide an efficient and dynamic computing resource.

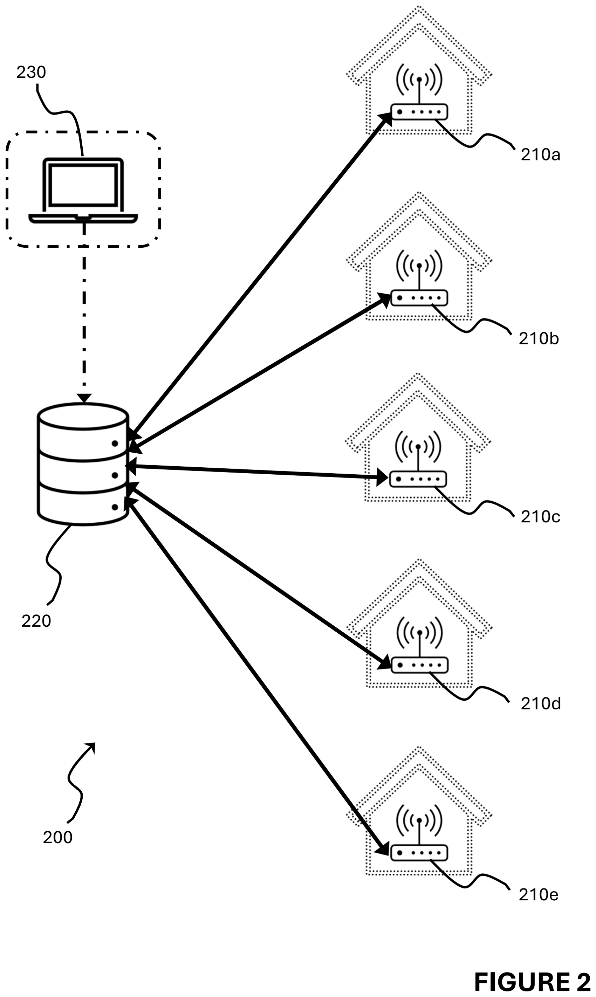

FIGURE 2 shows a schematic representation of a distributed computing system 200 comprising a grid computing infrastructure making use of unused or latent computational resources at broadband routers and modems. The distributed computing system comprises a control node 220, which is a central computer or server. The control node 220 acts to manage and administer the grid computing network, including monitoring the available distributed computational resources at the grid computing network. The control node 220 acts to provide a central gateway to any potential user of the distributed computational resources at the grid computing network.

The distributed computing system 200 also comprises a plurality of provider nodes 610a-610e. Each provider node 610a-610e is a computational device which donates its surplus (or redundant) computational resources (or computing capability) to the grid computing network. Each provider node 610a-610e may donate processing capability and/or memory capability. The processing capability may be provided by a central processing unit (CPU), graphical processing unit (GPU) or neural processing unit (NPU) at the computational device of the provider node 610a-610e. For instance, computing capacity at a CPU may be considered as a measure of MIPS or compute cycles. The memory capability may be provided by RAM or hard disk memory at the device acting as a provider node 610a-610e.

According to the present invention, at least one of the provider nodes 610a-610e is implemented as a computational device that is a customer premises equipment CPE, being either a broadband router (also known as a residential gateway) or a modem. The broadband router or modem is situated in a consumer (or customer) residence, and may belong to a private or business consumer. In the specific example of FIGURE 2, all the provider nodes 610a-610e are implemented as customer premises equipment being a broadband router or a modem, but it will be understood that other types of computational device could also act as some of the provider nodes within the distributed computer system. Each customer premises equipment has a data connection to the control node via the internet. Each customer premises equipment has some latent or unused computational resources (typically CPU capacity or memory capacity).

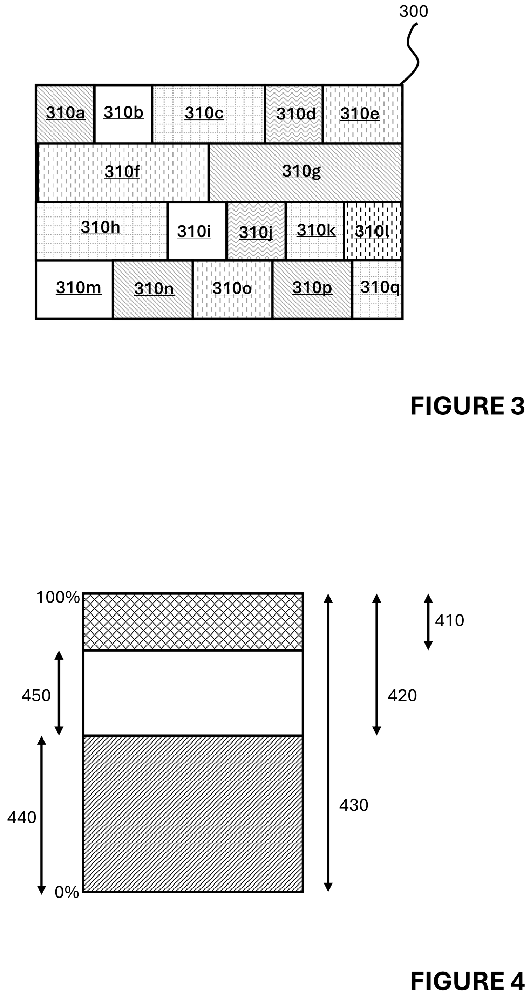

The control node 220 and the plurality of provider nodes 610a-610e are arranged in a grid computing network. The grid computing network aggregates surplus or 'spare' computational resources at the plurality of provider nodes 610a-610e to provide a distributed computational resource. Whilst the surplus computational capability at an individual provider node may be small (and may be different for each provider node), the aggregate capability across a large number of provider nodes can be significant. FIGURE 3 provides a schematic representation of the distributed computational resource 300, which is made up from (or is an aggregate of) the varying amounts of surplus computational resources 310a-310q donated by a large number (17 in the example of FIGURE 3) of different provider nodes.

The use of consumer broadband routers, residential gateways and modems, which are connected to existing data networks in their thousands (or even millions) provide an exciting opportunity to make use of redundant computing capability in a grid computing infrastructure. In particular, the disclosed distributed computing system 200 offers efficient use of existing hardware. Compared to use of a data centre to provide computing resources, the disclosed distributed computing system 200 also has the advantage that the provider nodes are geographically distributed, therefore avoiding the requirement for a single large power source (as well as the need for significant heat removal) at a particular location.

FIGURE 4 shows a schematic representation of the division of computational resources at a single provider node 610a. It will be understood that the surplus computational resources 410, which are aggregated in the grid computing network, comprise an amount or a proportion of the latent or unused computational resources 420 at each provider node at any given time. At any given time, the unused computational resources 420 represent the difference between the maximum possible computational resource capacity 430 (for instance, specified by the hardware provided at the device acting as a provider node) and the computational resources in use 440 at the provider node in order to perform the core function of the computational device acting as the provider node. For example, in the case of a broadband router acting as a provider node, the core function will be to route communications between the internet and any connected devices. However, only a proportion or part of the unused computational resources 420 at a provider node will be considered the surplus computational resources 410 that are donated to a grid computing network.

Providing only a certain proportion of the unused computational resources 420 as surplus computational resources 410 to be donated to the grid computing network ensures that there is always some spare capacity 450 at a provider node that could be used to meet a change in demand for computational resources to fulfil the core function of the computational device implemented as a provider node. Typically, the surplus computational resources 410 aggregated in the grid computing network will be a predefined proportion of the latent or unused computational capacity 420. The predefined proportion may be for instance 50%, or 75%, of the latent or unused computational capacity 420 at a given computational device acting as a provider node. In order to retain some latent or unused computational capacity 420 at a device to provide its core functions, it will be understood that, in some cases, insufficient unused computing resources will be available to allow surplus computational resources to be provided to the grid network (in which case, the device at least temporarily ceases to act as a provider node). This is described in more detail below.

Depending on the computational resources 440 required at any given time to perform the core functions of the device acting as a provider node, the amount of latent or unused computational capacity 420 at each provider node will change with time. Accordingly, the specific amount of surplus computational resources 410 at any given provider node (being only a proportion of the latent or unused computational capacity) will also change with time. Consequently, the capacity of the distributed computational resource 300 provided by the grid computing network will also vary.

### Use of the distributed computational resources by a user node

Referring once more to the example of FIGURE 2, the distributed computing system further comprises a user node 230. The user node 230 is a computational device (for instance, a personal computer, a smartphone or a tablet) which is in communication with the control node 220. The user node 230 is a computational device configured to request use of at least a portion of the distributed computational resources provided by the grid computing network. Computational devices can switch roles between being a user node and a provider node in the described distributed computing system. More than one user node may be in communication with the control node at any one time.

In the example of FIGURE 2, the user node 230 is configured to send a request to the control node 220 for use of the distributed computational resources provided by the grid computing network. For example, the request may include an indication of the amount of computational resource (for instance, processor or memory capability) required to perform a particular computational task. Upon receipt of the request, the control node 220 can determine the amount of distributed computational resources currently available (in other words, being the total of the aggregated surplus computational resources from the provider nodes, minus any distributed computational resources already allocated to other user nodes). The control node 220 can then allocate a proportion of the available distributed computational resources provided by the grid computing network in response to the request from the user node.

After allocation of a portion of the distributed computational resources to a user node 230, the user node can invoke the allocated portion of the distributed computational resources to run a computational task. The task is provided to the control node 220 from the user node 230, and the control node 220 subdivides the task into smaller subtasks which are distributed amongst the provider nodes 210a-210e. Each provider node 210a-210e can then work simultaneously and in parallel to run the allocated subtask, and output the result of its subtask to the control node 220. At the control node 220, the outputs of the subtasks are consolidated to deliver to the user node 230 a combined output of the original task.

The amount or proportion of distributed computational resource allocated to a user node 230 may be based on the amount of computational resource requested, and/or the amount of distributed resource available. For instance, the control node 220 may allocate an amount of computation resource that is equal to the amount requested, if this is available at the grid computing network. However, the full amount requested may not be granted and only some of the requested amount allocated, if the amount of distributed resource available is limited. Multiple user nodes may be connected to the control node and allocated a portion of the distributed computational resources.

Alternatively, in some cases no allocation of the distributed computational resource will be made to the user node 230 upon receiving a request, and instead the request will be rejected (i.e. not granted). This would be the case if, for example, the amount of computational resources requested is in excess of the amount of distributed computational resource available.

In order to allocate distributed computational resources in response to a request from a user node 230, the control node 220 must manage and be aware of the available distributed computational resources provided by the grid computing network. As such, the control node 220 is configured to determine the unallocated capacity of the distributed computational resource, wherein the total possible capacity of the distributed computational resource 300 is a total of the surplus computational resources 310a-310q received from each provider node of the plurality of provider nodes 210a-210e. Once the available capacity at the distributed computational resource has been determined, this can then be provided or reported to the user node 230 (for instance, upon request). For example, the control node 220 may send to the user node 230 an indication of the amount of distributed computational resource available for use by the user node.

In a particular example, the interaction between the user node 230 and the control node 220 can take place using a dedicated application with a specifically designed Application Programming Interface (API). Such an API could be provided via, for example, Vodafone Technology^{RTM}'s Network as a Platform (NaaP) service which makes key network features and capabilities available as simple APIs in a centralized API catalogue. The API may be a NaaP API to communicate the available CPU capacity in the distributed computational resources to a 3^{rd} party running the dedicated application on the user node (i.e. a personal computer or smartphone). Furthermore, the API can provide an interface for the user node 230 to request use of the distributed computational resource from the control node 220, and to invoke its use.

### Use of Containerised Network Functions

Overall, the disclosed grid computing network requires specific software deployed at each node (control node 220, provider node 210a-210e, and user node 230) of the network. The software allows for the coordination and management of the resources on the grid computing network. For instance, at the control node 220 the software manages the segmentation of a task (proposed from a user node 230) into separate subtasks to be run at each provider node 210a-210e. The dedicated software deployed at each node ensures security, scheduling of data, and resource management at the grid computing network. In view of this, implementation of the disclosed grid computing network requires deployment and management of software at a customer premises equipment such as a broadband router, residential gateway, or modem, in order for these devices to act as a provider node. Furthermore, the deployment of software must take place without significant disruption to the service provided by the equipment (i.e. its core function), for instance due to a requirement to reboot the equipment.

In view of this, certain technologies are proposed for implementation of the distributed computing system. These include:
1. Remote management protocols at customer premises equipment (CPE): Said management protocols enable statistics (including in-use processor and memory capacity) at the CPE to be gathered at scale from a large number of connected computational devices. The remote management protocols also enable software updates to be remotely deployed to a population or subset of CPE. Examples of suitable remote management protocols include Broadband Forum TR-069 and TR-369 (USP) management protocols.
2. Deployment of Containerised Network Functions (CNFs) on CPE: CNFs are software services that fulfil network functions at a physical device whilst keeping the functions logically segmented inside, for example, Linux containers. CNFs communicate with each-other via standardised RESTful APIs, having a small performance footprint with the ability to scale horizontally, and are independent of guest operating system.

CNFs do not require specific hardware to host them, however various technologies are required to deploy computer applications as CNFs on a CPE at scale. These include:
- Use of general purpose or generic compute platforms which integrate multiple (previously physical) function virtually. An example of such a generic compute platform is Universal Customer Premises Equipment (uCPE), which has been used to demonstrate that broadband routers can run containerised functions (CNFs).
- BBF, App-enabled Services Gateway.
- RDK-B, Downloadable Application Containers.
- Prpl Foundation, Life Cycle Management (LCM), which can also be used to define the process priority).

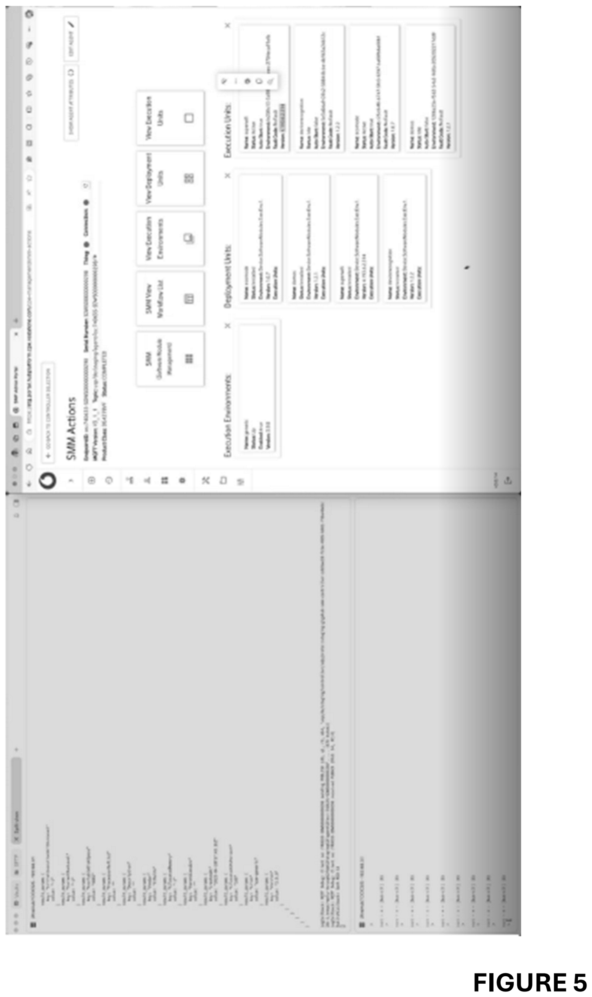

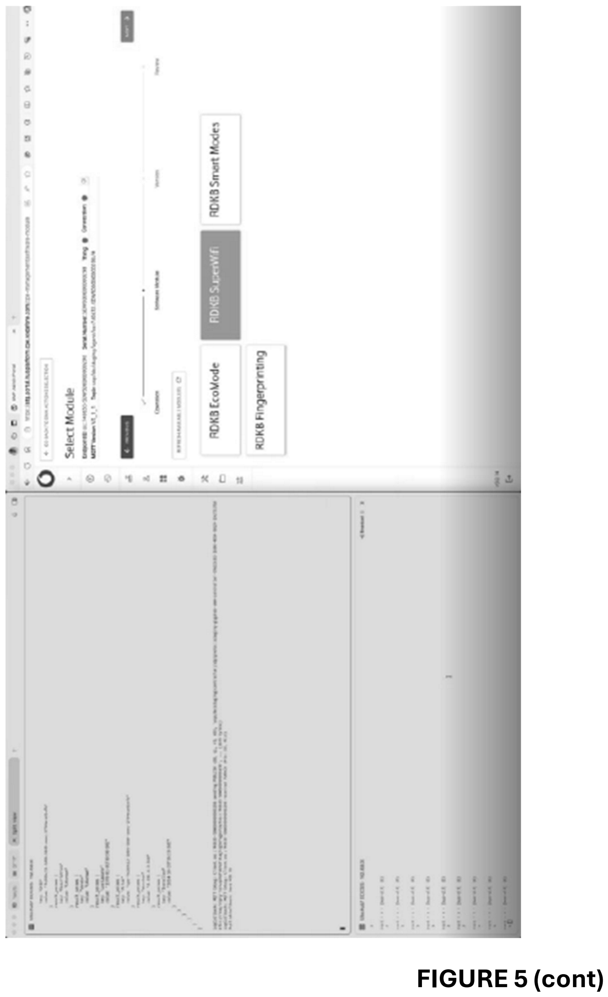

These technologies enable containerised software applications to be remotely pushed to a CPE to run in their own container, without needing to reboot the device. Prior to introduction of these technologies, CPE had needed to be rebooted for new software or firmware to take effect. As such, introduction of these technologies at the CPE, which cause the CPE to act in a manner more akin to a smartphone device, enable the proposed distributed computing system to be implemented in a manner that is convenient for users of the CPE implemented as a provider node. For completeness, FIGURE 5 shows screen shots from a real-time demonstration of deployed containerised functions on RDK-B based broadband routers.

### Addition or removal of a provider node

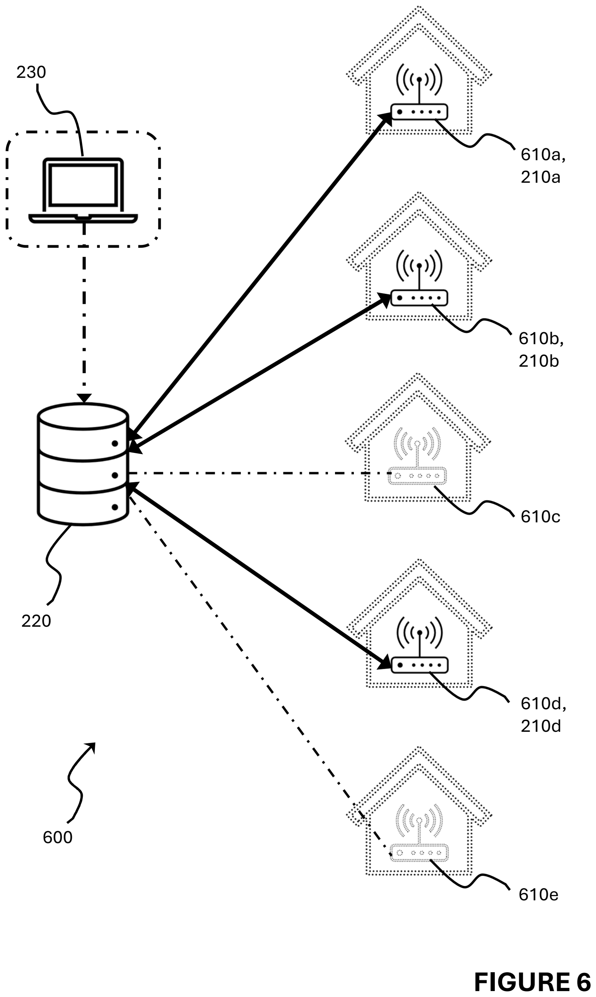

As mentioned above, a computational device may join the grid computing network as a provider node, or cease to act as a provider node in the grid computing network, dependent on the amount of unused computational resources at the given computational device. The unused computational resources at a computational device will vary in time, depending on the computational resources required to perform the core function of the device. Referring to the distributed computing system 600 of FIGURE 6, it can be seen that a set of computational devices 610a-610e are connected to a control node 220. Although all of the connected computational devices 610a-610e have the capability for use as a provider node, only a subset of the connected computational devices (three devices 610a, 610b, 610d, in the example of FIGURE 6) are acting as provider nodes 210a, 210b, 210d. The provider nodes 210a, 210b, 210d in the example of FIGURE 6 operate in a grid computing network in the same way as described above with respect to FIGURE 2. The connected computational devices 610c, 610e that are not acting as provider nodes continue to perform their core function, and may rejoin the grid computing network if or when surplus computational resources become available thereon.

The number and combination of provider nodes arranged in a grid computing network is dynamic and will change according to the computational resources required to perform the core function of any given provider node. In particular, a connected computational device (such as a customer premises equipment that is either a broadband router, a residential gateway or a modem) will only be implemented as a provider node in the grid computing network if it has sufficient unused computational capacity (meaning more than a predefined percentage of unused computational capacity). At any particular time, only a subset of computational devices connected to a control node and having the capability to act as a provider node will be in use as provider nodes. More specifically, each particular connected computational device will join the grid computing network (or leave the grid computing network) dependent on the amount of 'spare' computational resource at the device after the primary function of the computational device is met. The connection or disconnection of each connected computational device to the grid computing network (i.e. to act as a provider node) can be controlled at the connected computational device itself, or by the control node.

In an example (considering again the resource histogram at a particular device shown in FIGURE 4), a connected computational device (such as a customer premises equipment that is either a broadband router, a residential gateway or a modem) will only be implemented as a provider node (i.e. join the grid computing network) if the latent or unused computational capacity or resources 420 at the connected computing device exceeds a threshold proportion of the maximum possible computational resource capacity 430 at the connected computational device. The maximum possible computational resource capacity 430 at the connected computational device is the processing and memory capacity specified by the hardware at the device. If the unused computational resources 420 at a given connected computational device exceeds a predefined threshold, then that connected computational device will join the grid computing network as a provider node, and donate surplus computational resources (being a portion of the unused computational resources) to the distributed computational resource.

The predefined threshold may, in some instances by a certain percentage of the maximum possible computational resource capacity 430. For instance, the connected computational devices may only act as a provider node when the unused computational resources 420 constitute more than 50%, or more than 30%, or more than 20%, of the maximum possible computational resource capacity 430.

In a particular example where the connected computational device is a broadband router, in the middle of the night when few devices are connected to the router and sending data, the router may have a much greater amount of unused computational resources than during the middle of the day (for example) when a greater number of devices are connected to the router and sending data. Therefore, said broadband router may join the grid computing network during this period (i.e. at night), but then disconnect at times of higher usage of the broadband router (i.e. during the day).

The core functions of a connected computational device will be prioritised over the provision of computational resources to a grid computing network. As such, the computational device of the set of connected computational devices ceases to act as a provider node if the primary function of the connected computational device requires computational resources 440 that cannot be satisfied whilst the computational device is acting as a provider node. Some redundant or spare computational resource 450 will always be attempted to be maintained by the connected computational device, and so the connected computational device may cease to act as a provider node before the computational resources used to provide the core function 440 and the surplus computational resources 410 are equal to the maximum possible computational resource capacity 430 at any given node. The amount or proportion of spare computational resource 450 to be maintained at a given device may be predefined (or preprogrammed) on a device-by-device basis.

As noted above, the connection of a control node and a user node may be managed through a dedicated application, such as a Network as a Platform (NaaP) Application Programming Interface (API). This API may, for instance, allow a user at the user node to see the available capacity of the distributed computational resource, to request allocation of a portion of the distributed computational resource, and to then invoke (for instance, execute a function) on an allocated portion to the distributed computational resource. In this way, the control node has functions to manage and monitor the capacity of the distributed computational resource.

Accordingly, the control node 220 (for example, according to the example of FIGURE 6) is configured to receive metrics from each connected computational device of the set of connected computational devices 610a-610e. The metrics may be received upon request, or periodically at fixed intervals. The metrics may be received from all the connected computational devices 610a-610e, irrespective of whether a particular device is acting as a provider node at the time the metrics are sent. The metrics comprise information for determination of an amount of surplus computational resources 410 at each connected computational device. The information for determination of the amount of surplus computational resources 410 at each connected computational device may be the amount of surplus computational resources 410 at a given connected computational device, a measure of the unused computational resources 420 at a given connected computational device to allow the control node to calculate the surplus, or any other metrics that could allow the surplus to be determined.

The control node 220 determines a capacity of the distributed computational resource from the metrics received from each connected computational device of the set of connected computational devices 610a-610e. Here the capacity refers to the aggregate total of the surplus computational resources donated by each provider node. The control node 220 may also determine the total amount of the distributed computational resources that are allocated to one or more user node 230, and consequently the available distributed computational capacity that could be allocated to new requests from a user node.

The control node 220 is in communication with a computer memory or storage (not shown in FIGURE 6). For instance, this may be an internal hard disk at the device acting as the control node 220, or a connected computer memory. The control node 220 is configured to store the metrics received from the connected devices 610a-610e (or statistics derived from said metrics) in a database at the computer memory or storage, together with the time and date at which the metrics were recorded at a given connected device. An identifier of the given connected device could also be recorded.

### Reservation of predicted distributed computational resources

Using the stored metrics or statistics, a computer model may be developed to predict the typical capacity of the distributed computational resources at particular times of day, days of the week, or times of the year. The predictive computer model may run at the control node 220. The control node 220 may receive a request from a user at a user node 230 for use of the distributed computational resource at a future time (for instance, via the NaaP API mentioned above). The control node 220 may then reserve (i.e. allocate) an amount of the distributed computational resource at that future time, where the allocation is based on the amount of resources requested and the capacity of the distributed computational resource at the future time as predicted by the computer model. Effectively, the predictive computer model allows the control node 220 to provide a booking service for use of the distributed computational resources at a future time.

In one example, the computer model is a machine learning model, which is initially trained on metrics previously stored in the database. The machine learning model can be continually trained and updated as new metrics are received by the control node 220 from the set of connected computational devices 610a-610e.

In a further example, the control node 220 (via the dedicated NaaP API) may be configured to apply a charging structure to the distributed computational resource. For instance, the control node 220 may charge a user for access to or use of the distributed computational resource. The charge may be indicated to the user node 230 (for display to the user via the dedicated API) upon receipt of the initial request for use of the distributed computational resource, wherein the control node 220 requires an acceptance of the charge from the user via the user node 230 before allocation of any of the distributed computational resource.

The control node 220 may be configured to apply a dynamic charging model, so that a higher fee is applied for use of the distributed computational resources at times where demand is higher and/or supply is lower. In this way, the computer model (or machine learning model) mentioned above may be developed to apply the dynamic charging model for reservation of the distributed computational resources based on predicted supply and demand.

Application of the dynamic charging model, together with a booking system, may make use of the NaaP API discussed above. The API has functionality to enable the distributed computational resources to be accessible to a user at a user node 230 via an API query, and to provide a cost via the API for using the available distributed computational resources (or a portion of it). The NaaP API may further include the ability to book or reserve an amount of the distributed computational resources in advance and for a particular time slot.

### Use cases

The use cases for the disclosed distributed computing system are various. One option may be altruistic, allowing an owner of a device (such as a CPE) acting as a provider node to 'donate' the use of its surplus computational resources for solving complex problems such as those within scientific research. In an alternative use case, the surplus computational resources of a provider node could be monetised, so that the control node applies a fee schedule as discussed above.

One important application for the distributed computing system described could be for inference processing of an artificial intelligence (AI) model or machine learning (ML) model. In particular, whilst presently training of an Al or ML model can be computationally intensive requiring large amounts of processing capacity, the application or use of the same model once trained requires far less processing capacity. Therefore, use of the described distributed computing system could be a good candidate for execution of inference processing of an Al or ML model that has already been trained on a different system.

Nevertheless, in future, it may also be possible to train an Al or ML model on the described distributed computing system. This is particularly the case if an expected new generation of customer premises devices (such as a broadband router, residential gateway or modem) incorporate graphical processing units (GPU) or neural processing units (NPU) in place of central processing units (CPU). This would allow for a greater processing capacity at the CPE devices, which could be incorporated into the presently disclosed distributed computational resource.

A significant challenge envisaged for inference processing and for training of Al and ML models in future is the large power resources required to service the processing capability needed. This can be a limiting factor in expanding present day data centres, for instance. Beneficially, the application of the presently proposed distributed computing system for the purposes of inference processing and training of Al and ML model offers a system having distributed power sources, as each provider node will have its own (geographically distant) power supply, rather than requiring a single power source. The proposed model offers a scalable system, which removes the need for such a high concentration of power in one location (i.e. the data centre).

Advantageously, the disclosed distributed computing system offers a mechanism to harvest spare CPU and memory capacity across CPE including broadband routers, residential gateways or modems, and then and aggregating this capacity for use in solving complex computational tasks. The present disclosure also offers a dedicated NaaP API to inform a user at a user node (which may be an app developer) of the computational resources (including processing or memory capacity) available as a distributed computational resource at the grid computing network. In some cases, the NaaP API could allow a user to reserve distributed computational resources based on a predictive model prepared according to receive metrics on the availability of distributed computational resources, and could apply a dynamic charging schedule to use or reserve the distributed computational resources.

It will be understood that each node (being a user, control or provider node) is a computational device, each having a processor and memory. The memory at the given node stores computer-executable instructions that, when executed by the processor, cause the given node to perform the functions described above.

It should be noted that use of a CPE as a provider node would be approved by the owner of a given CPE before incorporation into the distributed computing network. Moreover, the organised and managed aggregation of the surplus computational resources at each provider node (to form the grid computing network as disclosed herein) distinguishes the proposed distributed computing system from any previously observed actions in which computing resources at a broadband router have been illegally hijacked or taken over (for instance, for the purposes of disruptive Distributed Denial of Service (DDoS) attacks). Any such (unpermitted) use of a broadband router's computational resources furthermore would not provide the other aspects of the disclosed distributed computing network, such as (but not limited to) management of a user node's request for use of the distributed computational resources (i.e. via an API) to a control node.

Although examples according to the disclosure have been described with reference to specific illustrative examples, other approaches according to the disclosure may be used. Certain features may be omitted or substituted, for example as indicated herein. Each feature disclosed in this specification, unless stated otherwise, may be replaced by alternative features serving the same, equivalent or similar purpose. Thus, unless stated otherwise, each feature disclosed is one example only of a generic series of equivalent or similar features.

In this detailed description of the various examples and/or embodiments, for the purposes of explanation, numerous specific details are set forth to provide a thorough understanding of the examples and/or embodiments disclosed. One skilled in the art will appreciate, however, that these various examples and/or embodiments may be practiced with or without these specific details. Furthermore, one skilled in the art can readily appreciate that the specific sequences in which methods are presented and performed are illustrative and it is contemplated that the sequences can be varied and still remain within the scope of the various examples and/or embodiments disclosed herein.

As used herein, including in the claims, unless the context indicates otherwise, singular forms of terms are to be construed as including the plural form and vice versa. For instance, unless the context indicates otherwise, a singular reference herein including in the claims, such as "a" or "an" means "one or more". Throughout the description and claims of this disclosure, the words "comprise", "including", "having" and "contain" and variations of the words, for example "comprising" and "comprises" or similar, mean "including but not limited to", and are not intended to (and do not) exclude other components. Also, the use of "or" is inclusive, such that the phrase "A or B" is true when "A" is true, "B" is true, or both "A" and "B" are true.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

The terms "first" and "second" may be reversed without changing the scope of the disclosure. That is, the terms are relative such that an element termed a "first" element or position may instead be termed a "second" element or position and an element termed a "second" element or position may instead be considered a "first" element or position.
Any steps described in this specification may be performed in any order or simultaneously unless stated or the context requires otherwise. Moreover, where a step is described as being performed after another step, this does not preclude intervening steps being performed.

It is also to be understood that, for any given component, example or embodiment described herein, any of the possible candidates or alternatives listed for that component may generally be used individually or in combination with one another, unless implicitly or explicitly understood or stated otherwise. It will be understood that any list of such candidates or alternatives is merely illustrative and not limiting, unless implicitly or explicitly understood or stated otherwise.

## Claims

1. A distributed computing system, comprising:
a control node; and
a plurality of provider nodes, one or more of the provider nodes being a customer premises equipment (CPE), each CPE comprising one of: a broadband router, a modem, a residential gateway;
wherein the control node and the plurality of provider nodes are arranged in a grid computing network to provide a distributed computational resource by aggregating surplus computational resources at the plurality of provider nodes.

2. The distributed computing system of claim 1, wherein each one of the provider nodes of the plurality of provider nodes are CPE being either a broadband router, a modem, or a residential gateway.

3. The distributed computing system of any preceding claim, wherein the surplus computational resources at each of the provider nodes of the plurality of provider nodes comprises central processing unit (CPU) capacity, graphics processing unit (GPU) capacity, neural processing unit (NPU) capacity, processing capacity at an application-specific integrated circuit (ASIC) and/or memory capacity.

4. The distributed computing system of any preceding claim, further comprising a user node, wherein the control node is configured to:
receive from the user node a request for use of the distributed computational resource provided by the grid computing network; and
allocate a proportion of the distributed computational resource provided by the grid computing network in response to the request from the user node, the allocation based on an amount of the distributed computational resources requested and an amount of available computing resources of the distributed computational resource.

5. The distributed computing system of any preceding claim, wherein the control node is connected to a set of connected computational devices, and each provider node of the plurality of provider nodes is a connected computational device from within the set of connected computational devices; and
wherein a connected computational device of the set of connected computational devices acts as a provider node when unused computational resources at the connected computational device exceeds a threshold proportion of the maximum possible computational resource capacity at the connected computational device.

6. The distributed computing system of claim 5, wherein the control node is configured to:
receive metrics from each connected computational device of the set of connected computational devices, the metrics comprising information for determination of an amount of surplus computational resources at each connected computational device; and
determine a capacity of the distributed computational resource from the metrics received from each connected computational device of the set of connected computational device; and
optionally, provide an indication of the determined capacity of the distributed computational resource to a user node.

7. The distributed computing system of claim 6, further comprising computer memory in communication with the control node, wherein the control node is further configured to:
store statistics relating to the determined capacity of the distributed computational resource at different times and dates in a database at the computer memory; and
execute a computer model to predict the capacity of the distributed computational resource at different times of day and days of the week, the computer model based on the statistics stored in the database.

8. The distributed computing system of claim 7, wherein the control node is configured to:
receive from a user node a request for use of the distributed computational resource provided by the grid computing network at a future time; and
reserve an amount of the distributed computational resource provided by the grid computing network at that future time in response to the request from the user node, the allocation based on an amount of the distributed computational resource requested and the predicted capacity of the distributed computational resource at that future time, as predicted by the computer model.

9. A method for providing a distributed computing system, comprising:
arranging a control node and a plurality of provider nodes in a grid computing network to provide a distributed computational resource by aggregating surplus computational resources at the plurality of provider nodes;
wherein one or more of the provider nodes is a customer premises equipment (CPE), each CPE comprising one of: a broadband router, a modem, a residential gateway.

10. The method of claim 9, wherein the surplus computational resources at each of the provider nodes of the plurality of provider nodes comprises central processing unit (CPU) capacity, graphics processing unit (GPU) capacity, neural processing unit (NPU) capacity, processing capacity at an application-specific integrated circuit (ASIC) and/or memory capacity.

11. The method of claim 9 or 10, further comprising:
receiving at the control node the request from a user node, the request for use of the distributed computational resource provided by the grid computing network; and
allocating by the control node an amount of the distributed computational resource provided by the grid computing network to the user node in response to the request from the user node, the allocation based on an amount of the distributed computational resources requested and an amount of distributed computational resource available.

12. The method of any one of claims 9 to 11, wherein the control node is connected to a set of connected computational devices, and each provider node of the plurality of provider nodes is a connected computational device from within the set of connected computational devices; and wherein a computational device of the set of connected computational devices acts as a provider node when unused computational resources at the connected computational device exceeds a threshold proportion of the maximum possible computational resource capacity at the connected computational device.

13. The method of claim 12, further comprising:
receiving, at the control node, metrics from each connected computational device of the set of connected computational devices, the metrics comprising information for determination of an amount of surplus computational resources at each connected computational device; and
determining, at the control node, a capacity of the distributed computational resource from the metrics received from each connected computational device of the set of connected computational device; and
optionally, providing an indication of the determined capacity of the distributed computational resource to a user node.

14. The method of claim 13, wherein further comprising:
executing, at the user node, a computer model to predict the capacity of the distributed computational resource at different times of day and days of the week, the computer model based on statistics relating to the determined capacity of the distributed computational resource at different times and dates.

15. The method of claim 14, further comprising:
receiving a request from the user node, the request for use of the distributed computational resource provided by the grid computing network at a future time; and
reserving an amount of the distributed computational resource provided by the grid computing network at that future time in response to the request from the user node, based on the allocation based on an amount of the distributed computational resource requested and the capacity of the distributed computational resource at that future time as predicted by the computer model.
